# EUROPEAN PATENT APPLICATION

(11) **EP 0 780 676 A1**
(43) Date of publication of application: **25.06.1997**
(21) Application number: 96309239.0
(22) Date of filing: 18.12.1996
(51) Int. Cl.: G01L 23/00, F02D 41/40

(54) **Injection pressure sensor system**

(30) Priority: 20.12.1995 JP 332194/95
(71) Applicant: MATSUSHITA ELECTRIC INDUSTRIAL CO., LTD., Kadoma-shi, Osaka-fu, 571 (JP)
(72) Inventor: Kusakabe, Hiroki, Sakai City, 590-01 (JP); Okauchi, Tohru, Ikoma City, 630-01 (JP); Takigawa, Masuo, Ikoma City, 630-01 (JP)
(74) Representative: Price, Paul Anthony King

(57) **Abstract**

A reference pressure value (Pr) for the fuel injection start timing (θ10) is set to be where the fuel pressure smoothly increases so that a fuel injection timing decision with little variation (Δθ) is provided even if the reference pressure value is varied (ΔP) due to noise or the fluctuation of supply voltage. An amplification circuit is used before a comparison circuit to increase a level of detection output.

## Description

The present invention relates to an injection pressure sensor system of a fuel injection pump for use in a diesel engine which system is employed for detecting a fuel injection start timing and a fuel injection end timing (hereinafter generally referred to as "injection timing").

Each year, increasingly rigid regulation has been imposed on hazardous exhaust gases from diesel engines. As an emission control measure, electronic control of fuel injection must be provided such that the level of hazardous gases is lowered by suitably controlling a fuel injection timing represented by a crank angle of a rotating engine. This requires a precise decision of the injection timing. According to a conventional method for deciding the injection timing generally known in this field, a position of a timer piston in a fuel injection pump is detected by a timer position sensor, and the injection timing is decided based on a value detected by the timer position sensor.

Unfortunately, the injection timing decided on the basis of the value detected by the timer position sensor does not accurately coincide with an actual injection timing, and therefore it is impracticable to decide the injection timing accurately. These years have seen a tendency to decrease a content of sulfur in the fuel in order to lower the level of sulfur oxides in the exhaust gases. Since sulfur serves as lubricant for the fuel injection pump, a reduced content of sulfur in the fuel leads to deterioration of various sliding parts of the fuel injection pump. This results in a considerable error between the injection timing detected by the timer position sensor and the actual injection timing.

In another conventional fuel injection pump for use in diesel engines, a valve in a fuel injection nozzle for injection of fuel into a cylinder is caused to operate by means of a responding valve to fuel pressure. The valve is adapted to open for injection of fuel into the cylinder when a pressure of the fuel delivered from the fuel injection pump has risen to a predetermined level. Some conventional example adopts a method of deciding the injection timing based on measurement of a fuel pressure within the fuel injection pump by an injection pressure sensor. This detection method is based on a more accurate relation between a rotational phase of the engine and the injection timing than the aforementioned detection method, thus always allowing for the decision of an injection timing actually required. A device for deciding the fuel injection timing based on this decision method is arranged such that instantaneous pressures of fuel pressurized in the fuel injection pump are compared with a predetermined reference value, and a square-wave signal is produced when the fuel pressure exceeds the reference value. A fuel injection start timing or fuel injection end timing is decided by a controller of the engine which is adapted to detect a rise or a fall edge of the square-wave signal.

The following problem exists with the latter example of the injection pressure sensor adapted to compare a fuel pressure in the fuel injection pump with the reference value to thereby produce a square-wave signal. Unfortunately, a minimal fluctuation of the fuel pressure leads to variation in the timing of outputting the square-wave signal, resulting in an error of the injection timing decision. In this connection, it is desirable to set the reference value to a level of pressure which is relatively stable and does not fluctuate so much. In fact, the conventional example is not designed to do so. The pressure of fuel within the fuel injection pump increases as compressed by a plunger, but the fuel pressure temporarily falls when the fuel injection nozzle starts fuel injection. Thereafter, the fuel pressure increases again. Accordingly, the pressure does not increase smoothly but changes in steps for a period after the fuel injection nozzle starts the fuel injection. If the reference value is set to such a pressure value, the reference value itself suffers unstableness. Consequently, the timing of outputting the square wave signal fluctuates greatly, thus hindering appropriate control of the injection timing.

The level of a detection output is relatively low because a pressure value for the decision of the injection timing is in a low range of about 1/6 to 1/10 of the maximum pressure of the fuel injection pump. In order to reduce variation in the errors of injection timing detection, a detection circuit is required of an extremely high S/N ratio and the reference value must be set with high precision.

In view of the foregoing, there is a need to overcome the above problems experienced in the conventional arts and to provide an injection pressure sensor system capable of accurately deciding the injection timing.

An injection pressure sensor system according to the present invention is adapted to detect a pressure of fuel in a fuel injection pump by means of pressure detection means and to compare the pressure detected by the pressure detection means with a reference pressure value predetermined by selecting a value of the fuel pressure which smoothly increases. Determined from the comparison result is time when the fuel pressure has reached the reference pressure value, based on which time a fuel injection start timing is decided. The reference pressure value is set to a level lower than a nozzle opening pressure at which a valve of a fuel injection nozzle is opened. At the same time, the reference pressure value is set to a level higher than a pressure fluctuated by resonance of a delivery pipe for fuel transportation or after the completion of fuel injection so that the reference pressure value is not affected by such pressure fluctuations.

The "fuel injection start timing" in the description hereof does not denote a timing of opening the fuel injection nozzle when the fuel injection nozzle is opened for injecting the fuel into the cylinder but a timing of a predetermined time before the timing of opening the injection nozzle.

An injection pressure sensor system of the present invention comprises pressure detection means for detecting a pressure of fuel in a fuel injection pump for use in a diesel engine (hereinafter simply referred to as "engine") and fuel injection timing decision means for deciding a fuel injection start timing represented by a crank angle of the engine by comparing the pressure detected by the pressure detection means with a reference pressure value, and the reference pressure value is set to a predetermined pressure value of the one when the fuel pressure monotonically increases.

A timing to which the fuel pressure reaches the reference pressure value is stable because the reference pressure value is set to a pressure of the one when the fuel pressure in the fuel injection pump increases at a stable rate.

A measurement of the fuel pressure is compared with the reference pressure value at a crank angle where the fuel pressure increases at a stable rate, whereby precise and stable decision of the fuel injection start timing is provided, allowing an injection period to be determined with high precision.

Another injection pressure sensor system of the present invention comprises pressure detection means for detecting a fuel pressure, and a fuel injection timing decision means for deciding the fuel injection start timing by comparing the pressure detected by the pressure detection means with the reference pressure value, wherein the reference pressure value is set to a value smaller than the nozzle opening pressure at which the valve of the fuel injection nozzle is opened.

By setting the reference pressure value to a level lower than the nozzle opening pressure, the reference pressure value is prevented from being affected by pressure fluctuation which occurs near the nozzle opening pressure. This allows the injection period to be decided with high precision.

The reference pressure value is set to a pressure other than those of the one when the fuel pressure is fluctuated by the fuel injection nozzle starting the fuel injection. This provides stable and precise decision of the fuel injection start timing.

Still another injection pressure sensor system of the present invention comprises pressure detection means for detecting a fuel pressure and fuel injection timing decision means for determining a fuel injection start timing by comparing the pressure detected by the pressure detection means with a reference pressure value, and the reference pressure value is set to a level lower than a nozzle opening pressure of a fuel injection nozzle and higher than a peak value of pressure generated by resonance of a delivery pipe for transporting the fuel from the fuel injection pump to a cylinder of the engine.

The reference pressure value is set to a level lower than the nozzle opening pressure of the fuel injection nozzle and higher than the peak value of the pressure generated by resonance of the delivery pipe for fuel transportation, to thereby provide for a stable timing to which the fuel pressure reaches the reference pressure value. This prevents an error of fuel injection start timing decision to be caused by fuel pressure pulse occurring after the completion of fuel injection and by a pressure build-up resulting from the resonance of the delivery pipe. Hence, the fuel injection start timing can be decided with high precision.

The reference pressure value is set to a level lower than the nozzle opening pressure and higher than the peak value of the pressure generated by the resonance of the delivery pipe, to thereby stabilize the timing to which the fuel pressure reaches the reference pressure value. This allows the fuel injection timing to be decided with high precision.

The aforesaid pressure detection means is mounted to the fuel injection pump for detection of a pressure in a plunger chamber of the fuel injection pump.

Accordingly, the fuel pressure in the fuel injection pump can be detected directly.

Further, the reference pressure value is also set to a value greater than a maximum value of residual pressure representing a pressure within a fuel injection pipe after the fuel injection pump has injected the fuel.

The reference pressure value is set to a value greater than a peak value of the residual pressure in the fuel injection pipe to thereby detect pressure when the pressure is monotonically increasing after opening of a delivery valve of the fuel injection pump. This enhances the precision of decision of the fuel injection start timing.

Yet another injection pressure sensor system of the present invention comprises pressure detection means for detecting a fuel pressure, amplification means for amplifying a level of a signal indicative of lower pressure of the detection output from the pressure detection means, and fuel injection timing decision means for deciding a fuel injection start timing by comparing an output from the amplification means with the reference pressure value.

The amplification of the level of the output signal indicative of a lower portion of the fuel pressure contributes to an increased precision of comparison between a detected pressure value and the reference pressure value. Moreover, a setting precision of the reference pressure value and an S/N ratio of a detection circuit of the injection pressure sensor are improved. Furthermore, a precision of comparison result between the reference pressure value and the fuel pressure is also improved by increasing the level of the detection output corresponding to a low fuel pressure. Accordingly, even if the setting precision of the reference pressure value or the S/N ratio of the injection pressure sensor is low, the fuel injection start timing can be determined with high precision. Additionally, a low setting precision of the reference pressure value and S/N ratio of the injection pressure sensor allow reduction of the production costs.

The aforesaid amplification means amplifies only signals higher than a peak value of pressure generated by the resonance of the delivery pipe for transporting the fuel from the fuel injection pump to the cylinder of the engine.

Since the amplification is performed exclusively on the signal indicative of pressure higher than the peak value of the pressure generated by the resonance of the delivery pipe, a range from a level of the nozzle opening pressure to a level of the pressure generated by the resonance is expanded to thereby increase a range allowing the setting of the reference pressure value. This prevents some variation of the reference pressure value from exerting much influence on the precision of the decision of fuel injection start timing.

The reference pressure value is set to a fuel pressure other than those of when the delivery valve is closed. This stabilizes a timing to which the fuel pressure reaches the reference pressure value, thus allowing the fuel injection start timing to be decided with high precision.

### BRIEF DESCRIPTION OF THE DRAWINGS

Fig. 1 is a sectional view illustrating an injection pressure sensor employed in common by the first and second embodiments;
Fig. 2 is a side elevation, partly in cross section, of a fuel injection pump of the typical electronic control system to which the aforesaid injection pressure sensor is mounted;
Fig. 3 is a graphical representation illustrating a waveform indicative of the relation between a pressure of fuel pressurized in the fuel injection pump and a crank angle of an engine;
Fig. 4 is a block diagram illustrating a detection circuit of an injection pressure sensor system of the first embodiment;
Fig. 5A is a graphical representation of a waveform indicative of the relation between the pressure of fuel pressurized in the fuel injection pump and the crank angle of the engine of the first embodiment;
Fig. 5B is a graphical representation of a waveform of an output from the detection circuit of Fig. 4;
Fig. 6A is a graphical representation illustrating the pressure of fuel pressurized in the fuel injection pump and the crank angle of the engine where the reference pressure value Pr changes;
Fig. 6B is a graphical representation illustrating a waveform of an output from the detection circuit where the reference pressure value Pr changes;
Fig. 7A is a graphical representation of a waveform indicative of the relation between the pressure of fuel pressurized in the fuel injection pump and the crank angle of the engine when the reference pressure value Pr is set to a pressure corresponding to a crank angle in a range where the fuel pressure changes drastically;
Fig. 7B is a graphical representation of a waveform indicative of an output from the detection circuit when the reference pressure value Pr is set to a pressure corresponding to a crank angle in a range where the fuel pressure changes drastically;
Fig. 8 is a block diagram illustrating a detection circuit of the second embodiment; and
Fig 9. is a graphical representation of a waveform of output from an amplification circuit illustrating a state where an output from the detection circuit of the second embodiment is amplified, the output indicating the pressure change.

### DESCRIPTION OF THE PREFERRED EMBODIMENTS

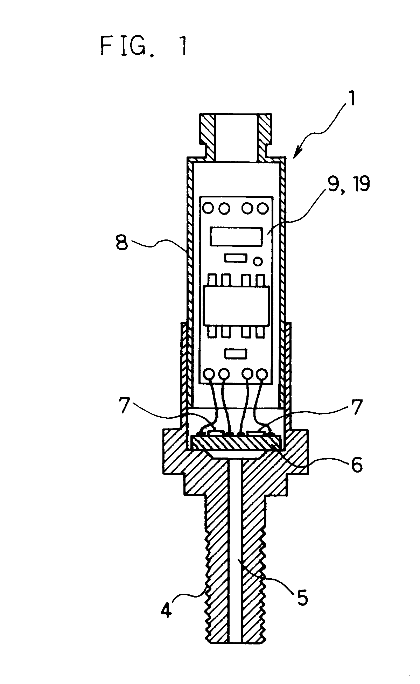

Preferred embodiments of the present invention will hereinafter be described with reference to the attached drawings Figs. 1 through 9.

### First embodiment

Now referring to Figs. 1 through 6, description will be given on an injection pressure sensor system according to a first embodiment of the invention.

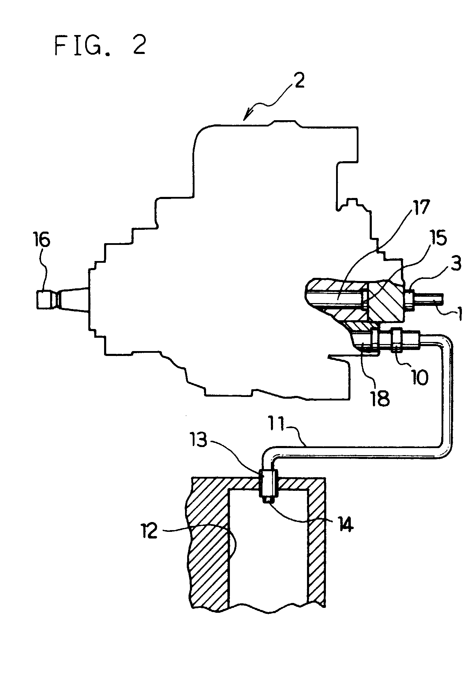

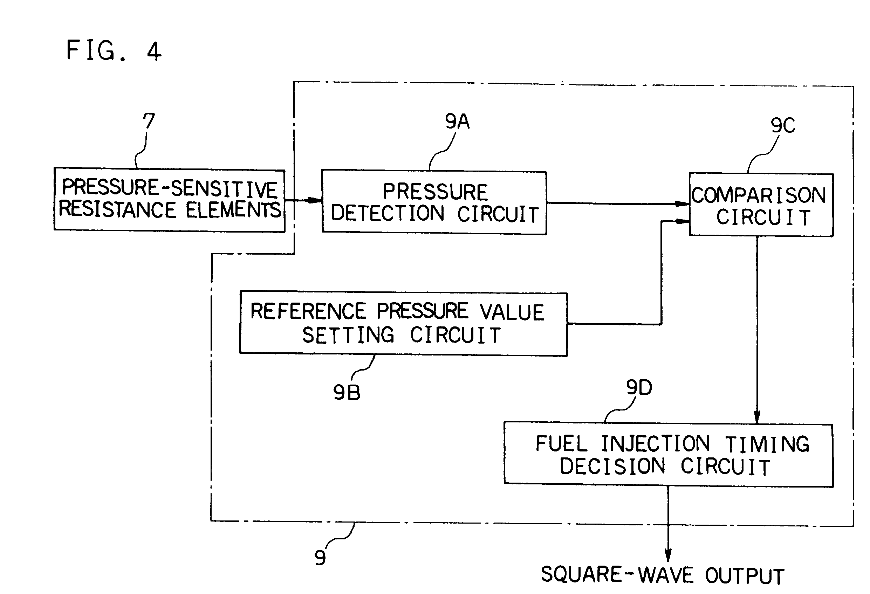

Fig. 1 is a sectional view illustrating an injection pressure sensor 1 employed in common by the first and a second embodiments. As shown in Fig. 1, the injection pressure sensor 1 is attached to an injection pressure sensor mounting portion 3 of a conventional fuel injection pump 2 shown in Fig. 2 by means of a thread 4 threaded into place. The injection pressure sensor 1 acting as pressure detection means includes a pressure pass 5 at the lower portion thereof, which communicates with a plunger chamber 15 of the fuel injection pump 2 for applying pressure to fuel. In the figure, an upper end of the pressure pass 5 is sealed with a diaphragm 6. Resting on the top of the diaphragm 6 are two pressure-sensitive resistance elements 7 known to the art. The pressure-sensitive resistance elements 7 are connected to a pressure detection circuit 9A of a detection circuit 9 of a construction shown in Fig. 4, which is received in an upper housing 8.

When a fuel pressure is applied to the diaphragm 6, the diaphragm 6 as well as the pressure-sensitive resistance elements 7 are distorted. The distortion of the pressure-sensitive resistance elements 7 causes change in the resistance value thereof, based on which resistance value the pressure detection circuit 9A of the detection circuit 9 measures a fuel pressure in the plunger chamber 15.

In Fig. 2, a rotation shaft 16 of the fuel injection pump 2 is coupled to a crank shaft (not shown) of an engine in such a manner as to rotate at a half the rotation speed of the engine. A delivery port 10 for delivering a pressurized fuel in the fuel injection pump 2 is coupled through an injection pipe 11 to a fuel injection nozzle 13 attached to a cylinder 12 of the engine. A valve 14 in the fuel injection nozzle 13 is adapted to open correspondingly to a fuel pressure for injecting the fuel into the cylinder 12.

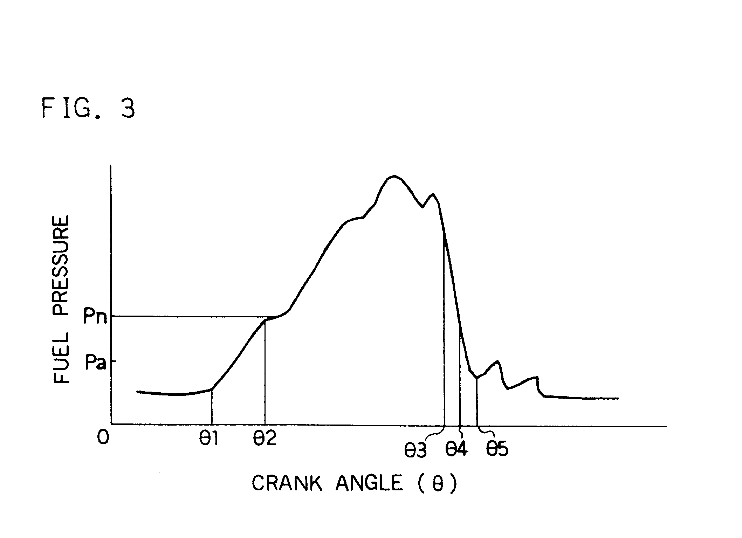

Fig. 3 is a graphical representation illustrating the change of the fuel pressure within the plunger chamber 15 of the fuel injection pump 2 detected by the pressure detection circuit 9A. When a crank angle of the crank shaft exceeds "θ1", the fuel is compressed by a plunger 17 in the plunger chamber 15. A delivery valve 18 of the fuel injection pump 2 is adapted to open when the pressure within the plunger chamber 15 exceeds a residual pressure Pa within the injection pipe 11, the residual pressure Pa representing a pressure level after the fuel injection. Then the pressure is further increased to reach a nozzle opening pressure Pn at a crank angle θ2, where the valve 14 of the injection nozzle 13 opens for injection of the fuel into the cylinder 12. When the valve 14 opens, the fuel injection temporarily slows down the rate of pressure increase. However, the plunger 17 continues to compress the fuel thereby producing a pulsation of fuel pressure which starts increase again. The fuel injection is terminated at a crank angle θ3, for example, where the fuel in the plunger chamber 15 is bypassed for pressure decrease. As a result, the delivery valve 14 is closed at a crank angle θ4. Thereafter, a sudden pressure change occurs thereby to produce a pressure pulsation within the plunger chamber 15 (crank angle θ5). The pressure pulsation attenuates with the lapse of time.

Fig. 4 is a block diagram illustrating the detection circuit 9 of the injection pressure sensor 1 according to the first embodiment, wherein an output from the pressure detection circuit 9A is supplied to an input terminal of a comparison circuit 9C. A predetermined reference pressure value Pr is previously programmed in a reference pressure value setting circuit 9B. From them, the reference pressure value Pr is selected correspondingly to a value of pressure when the pressure within the plunger chamber 15 is monotonically increasing at a certain rate. An output indicative of the reference pressure value Pr is supplied to the other input terminal of the comparison circuit 9C. The comparison circuit 9C compares a detection output from the pressure detection circuit 9A with an output indicative of the reference pressure value Pr. The comparison results are applied to a fuel injection timing decision circuit 9D serving as means for deciding a fuel injection timing. Based on comparison outputs from the comparison circuit 9C, the fuel injection timing decision circuit 9D outputs a square-wave signal including a predetermined high level signal and low level signal. Description will hereinafter be given on the output signal from the fuel injection timing decision circuit 9D.

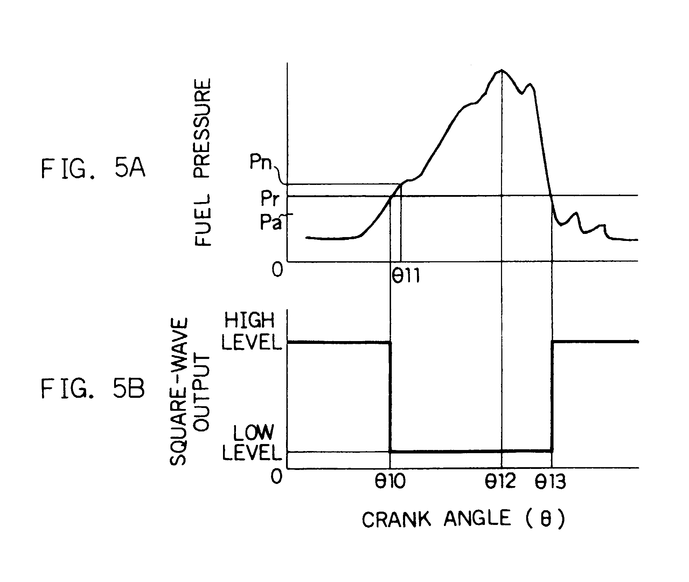

Fig. 5A illustrates a waveform of an output from the pressure detection circuit 9A, whereas Fig. 5B illustrates a waveform of an output from the fuel injection timing decision circuit 9D. The reference pressure value Pr is set to a lower level than the nozzle opening pressure Pn at which the valve 14 of the injection nozzle 13 is opened.

When the fuel pressure within the plunger chamber 15 is increased by the operation of the fuel injection pump 2, exceeding the reference pressure value Pr at a crank angle θ10, the output from the fuel injection timing decision circuit 9D is inverted from the high level to the low level. A timing when the crank angle is at "θ10" is referred to as "injection start timing", when the fuel is not yet to be injected into the cylinder 12. Thereafter when the fuel pressure is further increased to reach the nozzle opening pressure Pn at a crank angle θ11, the fuel is injected into the cylinder 12. The fuel pressure continues to increase to reach the peak value at a crank angle θ12. Subsequently, the fuel pressure is decreased by bypassing the fuel within the plunger chamber 15 and becomes lower than the reference pressure value Pr at a crank angle θ13. As a result, the output from the fuel injection timing decision circuit 9D is inverted again to the high level. A time period spanning crank angles θ10 to θ13 is referred to as "injection period". If the reference pressure value Pr and the form of the signal wave indicative of change in the fuel pressure do not change, the injection period always present a constant time width and the square wave corresponding to the time width is supplied by the fuel injection timing decision circuit 9D. Since an angle between the crank angles θ10 and θ11 is always constant, the timing of opening the valve 14 of the fuel injection nozzle 13 can be precisely decided at the crank angle θ11 based on the timing of the crank angle θ10. A similar processing to the conventional art is performed by applying this square wave output to the controller (not shown) of the engine thereby to allow the decision of a crank angle at which the fuel injection is started and of the injection period. Thus is provided the control of the injection period.

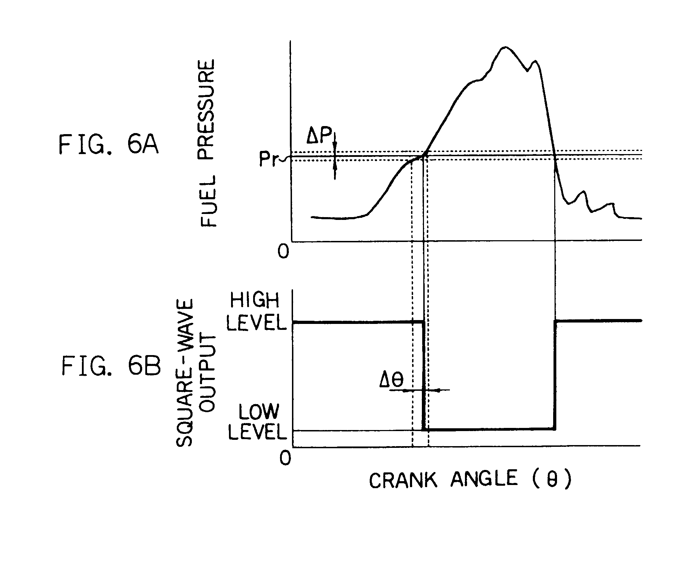

It is generally known that the reference pressure value Pr varies in a variation range AP due to noise or fluctuation of the supply voltage, as shown in Fig. 6A. In the case where such a variation exists, the following problem will occur if the reference pressure value Pr is set to a portion presenting a slow pressure change. Since the inclination of a curve indicative of the pressure change is small, the variation of the reference pressure value Pr in the variation range ΔP indicated by two broken lines in the figure results in the variation of the crank angle θ indicative of the injection start timing in a greater variation range Δθ, as shown in Fig. 6B.

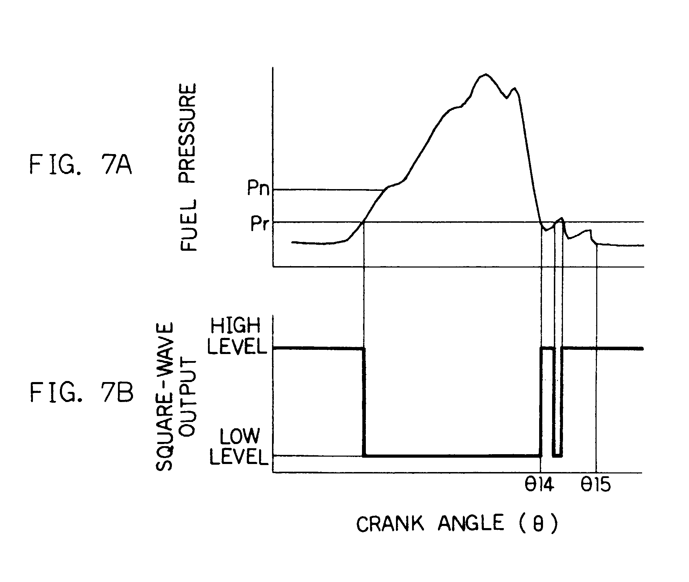

As shown in Fig. 7, another problem occurs if the reference pressure value Pr is set to a pressure value in the range of the crank angles θ14 to θ15 after the completion of fuel injection when a pressure pulsation exists. Since a notable pressure fluctuation of the pressure value exists near the reference pressure value Pr, as shown in Fig. 7B, the square wave output from the fuel injection timing decision circuit 9D repeats vibration in a short cycle, resulting in a serious error of decision of the injection timing.

According to a first operation example of the first embodiment, the reference pressure value Pr of the reference pressure value setting circuit 9B is set to a portion presenting a monotonous pressure increase as shown in Fig. 5, instead of portions where the pressure change is slow or the pressure pulsation exists, as shown in Figs. 6 and 7. That is, it is desirable to set the reference pressure value Pr to a portion where the pressure increases at a constant rate. Comparison of the fuel pressure with the reference pressure value Pr is performed at a crank angle where the fuel pressure increases at a stable rate, whereby the fuel injection timing is decided in a precise and stable manner. This allows the injection period to be decided with high precision.

Next, description will be given on a second operation example of the first embodiment. In the second operation example, the reference pressure value Pr of the reference pressure value setting circuit 9B is set to a level lower than the nozzle opening pressure (pressure Pn in Fig. 5A) of the valve 14 of the furl injection nozzle 13. As a result, the output of the fuel injection timing decision circuit 9D is not affected by the pressure decrease caused by opening the valve 14 of the fuel injection nozzle 13, thus reducing the error of decision of the fuel injection timing. More specifically, the reference pressure value Pr is set to a value except for that presented during a period when the pressure change is slowed by starting the fuel injection by means of the fuel injection nozzle 13. Accordingly, the variation of the fuel injection start timing can be reduced thereby to allow the injection period to be decided with high precision.

According to a third operation example of the first embodiment, the reference pressure value Pr of the reference pressure value setting circuit 9D of fig. 4 is set to a level lower than the nozzle opening pressure Pn of the valve 14 of the fuel injection nozzle 13 and lower than the peak value of the pressure pulsation after the fuel injection in the range of the crank angles θ14 to θ15, as shown in Fig. 7A. This may prevent an erroneous decision of the fuel injection timing caused by the pressure fluctuation due to resonance and the pressure pulsation occurring after the completion of fuel injection, as shown in Fig. 7B.

The delivery valve 18 of the fuel injection pump 2 is adapted to open when a pressure within the plunger chamber 15 exceeds a residual pressure within the injection pipe 11. Therefore, the fuel injection is not started when the pressure within the plunger chamber 15 is lower than the residual pressure within the injection pipe 11. When the delivery valve 18 is opened, the pressure within the plunger chamber 15 drastically fluctuates.

According to a fourth operation example of the embodiment, the reference pressure value Pr is set to a level higher than the residual pressure Pa within the injection pipe 11, as shown in Fig. 5(a). Hence, the reference pressure value Pr is set to a pressure which is not affected by the fluctuation of pressure caused by opening the delivery valve 18. Thus, pressure detection is performed when the pressure is monotonically increasing after the delivery valve 18 of the fuel pump 2 is opened and therefore, precise decision of the fuel injection timing is achieved.

### Second embodiment

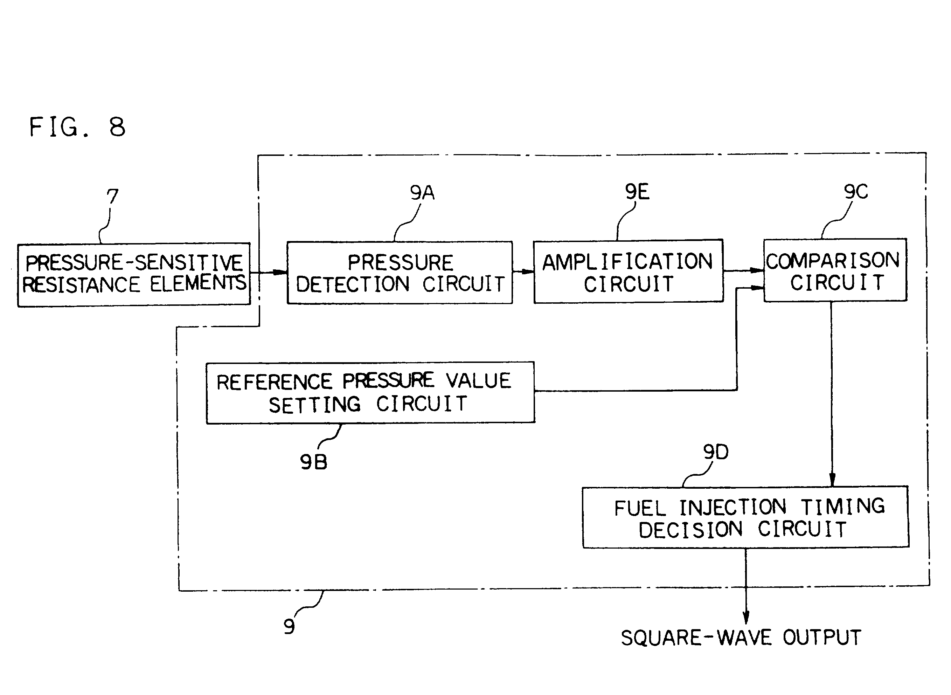

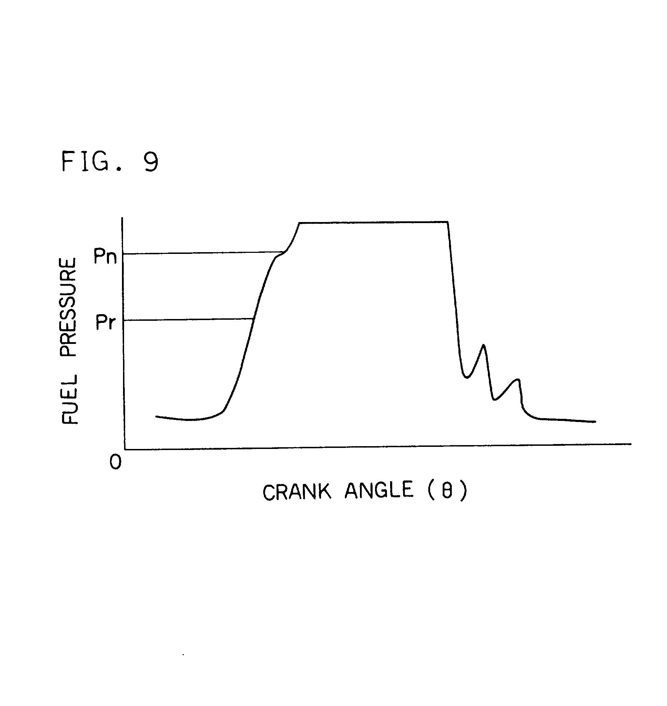

Now referring to Fig. 8, description will be given on a second embodiment of the invention. Fig. 8 is a block diagram illustrating a detection circuit 19 of the injection pressure sensor 1 according to the second embodiment hereof. In the figure, the pressure detection circuit 9A, reference pressure value setting circuit 9B, comparison circuit 9C and fuel injection timing decision circuit 9D are the same as those shown in Fig. 4. In the second embodiment, an amplification circuit 9E is interposed between the pressure detection circuit 9A and the comparison circuit 9C. The amplification circuit 9E amplifies the detection output of the pressure detection circuit 9A thereby to increase a level of the detection output corresponding to low pressure values, as shown in Fig. 9 illustrating the waveform. In this case, the detection output corresponding to high pressures is saturated but does not affect the pressure detection.

In the second embodiment, the level of output indicative of the reference pressure value Pr supplied by the reference pressure value setting circuit 9B is higher than that of the first embodiment whereas the reference pressure value Pr corresponding to the output level is set in a range higher than the residual pressure Pa and lower than the nozzle opening pressure Pn.

The second embodiment is adapted to expand a level of a portion of the detection output corresponding to low pressures required for the comparison with the reference pressure value Pr, thereby allowing the inclination of the waveform indicative of the pressure level to be increased in the proximity of the reference pressure value Pr. Accordingly, influence on the precision of injection timing decision can be reduced even when a setting precision of the reference pressure value Pr is low or the injection pressure sensor itself has a low S/N ratio. This allows the detection circuit 19 to be composed of a less costly circuit element of a lower precision and offers decision results with high precision despite a low setting precision of the reference pressure value Pr and the low S/N ratio of the injection pressure sensor. Additionally, the amplification circuit 9E may employ a non-linear amplification circuit comprising a non-linear element thereby to amplify only the level of detection output corresponding to a pressure value which is higher than a peak value of the pressure pulsation after the completion of fuel injection and lower than the nozzle opening pressure Pn. This arrangement does not expand a level of the detection output corresponding to a value of a pulsatile pressure but expands only the level of detection output corresponding to a pressure to be compared with the reference pressure value Pr, thus achieving the decision of the fuel injection timing with a further higher precision.

## Claims

1. An injection pressure sensor system comprising pressure detection means (1) for detecting a pressure of fuel pressurized in a fuel injection pump (2),
said system is characterized by comprising
fuel injection timing decision means (9D) for deciding a fuel injection start timing represented by a crank angle of an engine by comparing the pressure detected by said pressure detection means (1) with a reference pressure value (Pr) set to a predetermined pressure value of when said fuel pressure monotonically increases.

2. An injection pressure sensor system in accordance with claim 1, wherein
said pressure detection means (1) is mounted to the fuel injection pump (2) for detection of a pressure within a plunger chamber (15) of the fuel injection pump.

3. An injection pressure sensor system in accordance with claim 1 or 2, wherein
said reference pressure value (Pr) is set to a level higher than the maximum value of a residual pressure representing a pressure within a delivery pipe (11) after the fuel injection pump (2) has injected the fuel.

4. An injection pressure sensor system in accordance with claim 1 or 2, wherein
said reference pressure value (Pr) is set to a level lower than a nozzle opening pressure at which a valve (14) of a fuel injection nozzle (13) is opened for injecting the fuel into the engine, the fuel injection nozzle (13) being coupled to the fuel injection pump (2).

5. An injection pressure sensor system in accordance with claim 1 or 2, wherein
said reference pressure value (Pr) is set to a level lower than a nozzle opening pressure at which a valve (14) of a fuel injection nozzle (13) is opened for injecting the fuel into the engine, the fuel injection nozzle being coupled to the fuel injection pump (2), and higher than a peak value of pressure generated by resonance of a delivery pipe (11) for transporting the fuel from the fuel injection pump to the engine.

6. An injection pressure sensor system in accordance with any one of claims 1 to 5, further comprising
amplification means (9E) for increasing a level of a signal indicative of a low pressure of detection output supplied by said pressure detection means, and
fuel injection timing decision means (9D) for deciding a fuel injection start timing represented by a crank angle of an engine by comparing an output from said amplification means (9E) with a reference pressure value (Pr).

7. An injection pressure sensor system in accordance with claim 6, wherein
said amplification means (9E) amplifies only a signal indicative of a pressure higher than a peak value of pressure generated by resonance of a delivery pipe (11) for transporting the fuel from the fuel injection pump (2) to a cylinder of the engine.

8. An injection pressure sensor system in accordance with claim 1, wherein
said reference pressure value (Pr) is set to a level higher than or lower than a value of fuel pressure of when a delivery valve (18) of the fuel injection pump (2) is closed.
